Europäisches Patentamt

European Patent Office

Office européen des brevets

(19)

(11) Publication number: **0 105 144**
**B1**

(12) **EUROPEAN PATENT SPECIFICATION**

(45) Date of publication of patent specification: **19.11.87**

(21) Application number: **83107952.0**

(22) Date of filing: **11.08.83**

(51) Int. Cl.⁴: **B 60 B 33/02**

(54) **Cam wheel and caster lock.**

(30) Priority: **30.09.82 US 430166**

(43) Date of publication of application:
**11.04.84 Bulletin 84/15**

(45) Publication of the grant of the patent:
**19.11.87 Bulletin 87/47**

(84) Designated Contracting States:
**DE FR GB**

(56) References cited:
**DE-A-2 516 516**
**GB-A- 926 202**
**US-A-1 733 536**
**US-A-2 253 824**
**US-A-4 219 903**

(73) Proprietor: **STANDEX INTERNATIONAL**
**CORPORATION**
**6 Manor Parkway**
**Salem New Hampshire 03079 (US)**

(72) Inventor: **Black, John William**
**5281 Walnut Grove**
**Hickory Corners Michigan (US)**

(74) Representative: **Liebau, Gerhard, Dipl.-Ing.**
**Birkenstrasse 39**
**D-8900 Augsburg 22 (DE)**

Courier Press, Leamington Spa, England.

## Description

### Field of the Invention

This invention relates to an improved wheel braking apparatus for use on push/pull carts, beds, furniture or the like and, more particularly, to an improved braking apparatus which is adapted to prevent rotation of a wheel on a fixed frame or yoke or a caster wheel and/or prevent a pivotal movement of the caster yoke relative to its pivot axis.

Specifically, this invention relates to a wheel bracket apparatus with the features of the first part of independent Claim 1, known from US—A—2,253,824.

### Background of the Invention

Wheels rotatably supported on fixed wheel brackets or yokes and casters are used in a wide range of industrial and commercial applications, and in many of these applications it is desirable to have a releasable braking apparatus incorporated into the wheel support structure to prevent rotational movement of the wheel. Further, in some applications wherein the wheel support structure is pivotal, it is desirable for the braking apparatus to be adopted to simultaneously prevent rotational movement of the wheel support structure relative to its pivot axis.

Wheels of the aforesaid type are typically supported for rotation by a bearing structure which is designed to withstand relatively large radial forces but is not adapted to withstand large axial forces. Thus, braking mechanisms which apply axially directed forces to one or both sides of a wheel can frequently produce axial force components on the bearing structure and rapidly decrease the operational life of the bearing. Accordingly, braking mechanisms which exert substantially radially directed forces on the wheel are considered superior.

A number of braking mechanisms for applying a radially directed force to a wheel have previously been developed, for example those disclosed in U.S. Patent Nos. 1 733 536, 1 998 236, 2 096 229, 2 147 064, 2 695 683, 2 707 794 and 2 905 275. Although these braking mechanisms have generally been adequate for their intended purposes, they have not been satisfactory in all respects. In particular, each of these braking mechanisms applies a radially directed force to the tread provided on the periphery of the wheel. This can in some cases accelerate wear of the tread and thus reduce the life time of the wheel. More importantly, normal operational wear of the wheel tread and the presence thereon of foreign substances such as dirt or oil picked up during normal use can significantly degrade the operation of the braking mechanism.

In addition, the braking mechanisms disclosed in these patents are typically somewhat complex and require the assembly of several parts which can be manufactured only by several machining operations. Several of these braking mechanisms also have parts which project axially beyond the side flanges of the wheel supporting bracket or yoke and are thus subject to possible damage from impacts with objects the wheel support structure passes during normal operational use.

Moreover, of the braking mechanisms disclosed in these patents, only that disclosed in U.S. Patent No. 2 707 794 is adapted to simultaneously prevent rotation of the caster wheel and pivotal movement of the caster yoke. This mechanism, however, as mentioned above, applies braking forces to the tread of the caster wheel. Further, this mechanism is relatively complex and is fully exposed, thereby increasing the likelihood of damage from impacts and reducing the aesthetic appeal of the caster.

Accordingly, it is an object of the present invention to provide a braking mechanism for a small wheel which is simple and inexpensive to manufacture and assemble, and which consists of a minimum number of parts which are preferably made by plastic injection molding techniques.

It is a further object of the present invention to provide a braking mechanism, as aforesaid, which is also adapted to releasably prevent pivotal movement of a caster yoke relative to the apparatus it supports.

It is a further object of the present invention to provide a braking mechanism, as aforesaid, which can be engaged and disengaged quickly and with minimal effort, but which effects secure braking of the wheel and/or caster yoke.

It is a further object of the invention to provide a braking mechanism, as aforesaid, in which braking forces are applied radially to the wheel, and are applied to a braking surface thereon other than the wheel tread.

It is a further object of the invention to provide a braking mechanism, as aforesaid, which is rugged and durable and requires little or no maintenance.

It is a further object of the invention to provide a braking mechanism, as aforesaid, in which braking of the wheel and caster yoke is actuated by a single manually operable lever.

It is a further object of the invention to provide a braking mechanism, as aforesaid, which is relatively compact and is disposed axially within the confines of the side flanges of the wheel supporting yoke.

It is a further object of the invention to provide a braking mechanism, as aforesaid, which is aesthetically pleasing and at least partially hidden from view.

It is a further object of the invention to provide a braking mechanism, as aforesaid, which can be retrofit into existing wheel and bracket units without modification of the bracket or wheel. In units where a bolt has been used to rotatably support the wheel on the bracket, the retrofit can be effected quickly and with the use of only simple hand tools.

### Summary of the Invention

The objects and purposes of the invention, including those set forth above, are met by providing a wheel braking apparatus with the features of independent Claim 1. Particular embodiments of that invention are realized with the features of the dependent Claims.

This braking apparatus includes a bracket and a wheel supported on the bracket for rotation about a first axis, the wheel having a tread on the periphery thereof and a generally annular and radially facing first braking surface concentric with its axis and located radially between the axis and the tread. A braking member has a generally radially facing second braking surface thereon which is adjacent the first braking surface provided on the wheel, the braking member being supported for substantially radial movement between braking and retracted positions in which the second braking surface is respectively in and substantially free of firm frictional engagement with the first braking surface. A manually actuable lever is cooperable with the braking member for effecting movement of the braking member between the braking and retracted positions.

An end cap is preferably disposed between the bracket and wheel and is fixed against rotation with respect to the bracket, the braking member being an elongate, arcuate, resiliently flexible braking shoe having one end fixedly secured to the end cap. The lever is supported on the end cap for pivotal movement about a second axis and has a cam surface thereon engageable with the braking shoe on a side thereof opposite the second braking surface for effecting the radial movement of the braking shoe between its braking and retracted positions in response to pivotal movement of the lever. The resilience of the braking shoe tends to urge it to its retracted position.

End caps are preferably provided on each side of the wheel, the lever being generally U-shaped and having two legs disposed on opposite sides of the wheel, the free end of each leg of the lever being pivotally supported on a respective end cap.

The bracket is preferably supported on a bracket support for pivotal movement about a second axis, and the bracket support has a generally annular third braking surface thereon concentric with the second axis. The braking mechanism includes a braking element having a fourth braking surface thereon and supported for movement between actuated and deactuated positions in which the fourth braking surface is respectively in and substantially free of firm frictional engagement with the third braking surface. The manually actuable lever is cooperable with both the braking element and the braking member and movement of the lever effects movement of the braking member and braking element from their retracted and deactuated positions, respectively, to their braking and actuated positions.

Brief Description of the Drawings

Exemplary embodiments of the invention will be described in detail hereinafter in connection with the drawings, in which:

Figure 1 is an elevational side view of a caster embodying the inventive braking mechanism;

Figure 2 is a fragmentary sectional view taken along the line II—II of Figure 1;

Figure 3 is a fragmentary sectional view taken along the line III—III of Figure 2;

Figure 4 is a fragmentary sectional view generally similar to Figure 2 but showing the braking mechanism in a different position of operation;

Figure 5 is a perspective view of an end cap which is a component of the braking mechanism of Figure 1;

Figure 6 is a fragmentary side view of an alternative embodiment of the braking mechanism of Figure 1;

Figure 7 is a sectional side view of a further alternative embodiment of the braking mechanism of Figure 1;

Figure 8 a sectional view taken along the line VIII—VIII of Figure 7; and

Figure 9 is a sectional view taken along the line IX—IX of Figure 7.

Certain terminology is used herein for convenience in reference only and is not to be considered limiting. For example, the words "up" and "down" will designate directions in the drawings to which reference is made. The words "in" and "out" will respectively refer to directions towards and away from the geometric center of the caster and designated parts thereof. Such terminology will include the words specifically mentioned, derivatives thereof and words of similar import.

Detailed Description

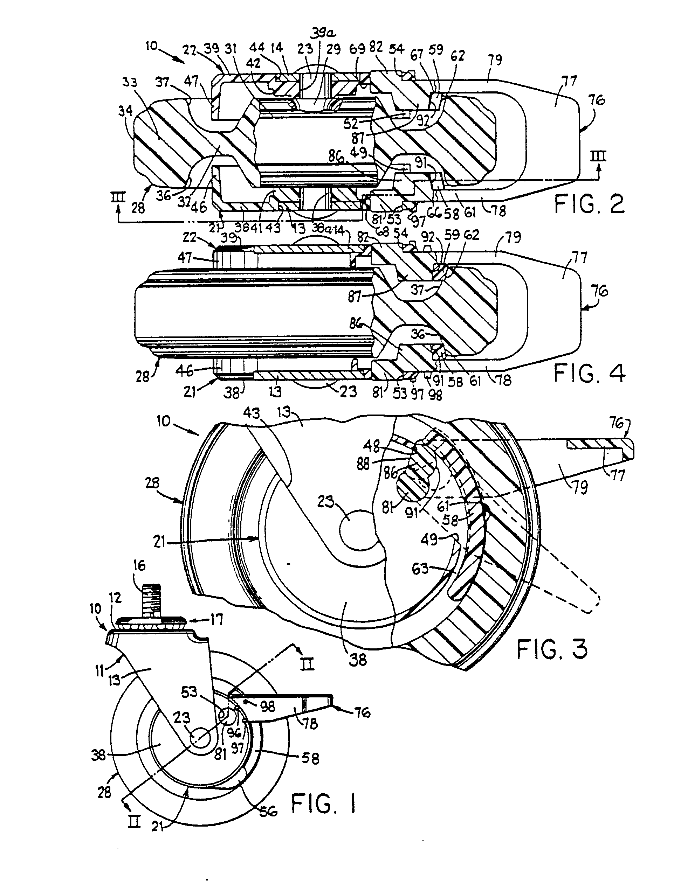

Referring to Figures 1 and 2, a caster 10 embodying the inventive braking apparatus includes a U-shaped yoke of bracket 11 having a bight 12 and spaced flanges 13 and 14.

The bight 12 of the yoke 11 is supported for pivotal movement about a vertical axis on a support member or inverted kingpin 16 by a bearing arrangement 17. The bearing arrangement 17 is conventional and therefore not described in detail, and is preferably substantially identical to that disclosed in U.S. Patent No. 4 219 903, the disclosure of which is incorporated herein by reference.

End caps 21 and 22 are provided between and adjacent the respective flanges 13 and 14 of the yoke 11. An axle or rivet 23 extends through aligned openings in the flanges 13 and 14 and end caps 21 and 22 and each end thereof is upset against the flanges 13 and 14.

A wheel 28 is rotatably supported on the axle 23 by means of a bearing arrangement 29 which is not illustrated in detail. The bearing arrangement 29 is preferably substantially identical to that disclosed in U.S. Patent No. 3 807 817, the disclosure of which is incorporated herein by reference. It will be recognized, however, that other axle and bearing arrangements could be utilized. For example, the axle and bearing arrangement disclosed in U.S. Patent No. 4 122 580, the disclosure of which is incorporated herein by reference, could be substituted for the axle 23 and bearing arrangement 29 described above.

The wheel 28 includes a hub 31 having the bearing arrangement 29 supported in a central hole therethrough, a web 32 extending radially outwardly from the peripheral edge of the hub 31, and an annular rim 33 provided at the periphery of the web 32, the outer peripheral surface of the rim 33 serving as a tread 34. The axial width of the web 32 is substantially less than the axial width of the hub 31 and rim 33, and approximately radially facing annular braking 36 and 37 are provided on the rim 33 adjacent and on opposite sides of the web 32.

It will be recognized that the wheel 28 need not be made entirely from a single material, but could be made from two or more materials. For example, the tread 34 could be provided on an annular layer of material different from the remainder of the wheel 28 and bonded to the periphery thereof as shown for example in U.S. Patent Nos. 4 294 491 and 4 295 686.

The end caps 21 and 22 are mirror images of each other. Each has a circular, approximately planar main wall 38 or 39 which is concentric with and substantially perpendicular to the axle 23, the axle 23 extending through a central opening therein. Cylindrical projections 41 and 42 project radially inwardly from the central portion of the respective main walls 38 and 39, the axle 23 extending concentrically therethrough. The upsets at the ends of the axle 23 maintain the axially inner surfaces of the projections 41 and 42 firmly against the axial ends of the bearing arrangement 29 to prevent axial movement of the bearing arrangement 29 and wheel 28 relative to the axle 23.

The circular main walls 38 and 39 have respective shallow recesses 43 and 44 in the outer surfaces thereof, the size and shape of which are substantially identical to the size and shape of the lower ends of the flanges 13 and 14, respectively. The flanges 13 and 14 are each disposed in a respective one of the recesses 43 and 44, the oppositely facing surfaces of the flanges 13 and 14 being substantially flush with the oppositely facing surfaces of the end cap wall portions 38 and 39, and the peripheral edges of the flanges 13 and 14 engaging the peripheral edges of the recesses 43 and 44 and thereby preventing rotation of the flanges 13 and 14 relative to the end caps 21 and 22 about the axle 23.

Arcuate flanges 46 and 47 are provided at the radially outer peripheral edges of the respective end caps 21 and 22 and project axially inwardly toward the wheel 28 in the region of the web 32 thereof. The ends 48 and 49 (Figure 3) of the flange 46 are spaced angularly by approximately 65°, the flange end 49 being located rearwardly of and approximately horizontally aligned with the axle 23 and the flange end 48 being offset upwardly and rearwardly from the axle 23. The flange 46 could be described in a slightly different manner as an annular flange having an opening therethrough in the upper rear portion thereof. The flange 47 is, of course, a mirror image of the flange 46, a flange end 52 being visible in relief in Figure 2.

A cylindrical opening 53 is provided through the circular main wall 38 of the end cap 21 in the region of the flange end 48, the axis of the cylindrical opening 53 being substantially parallel to the axle 23. A cylindrical opening 54 is provided in the end cap 22 in a mirror image fashion and is axially aligned with the opening 53.

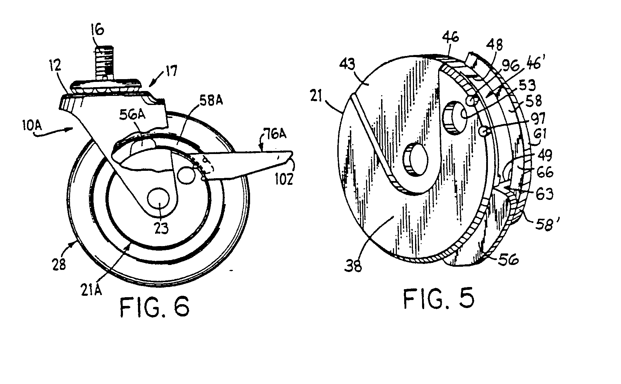

A radially outward projection 56 (Figures 1 and 5) is integrally provided on the periphery of the end cap 21 in the region of the flange end 49 and is preferably a substantially platelike projection which is approximately coplanar with the circular main wall 38 of the end cap 21. An elongated, arcuate braking shoe 58 has its one end integrally fixed to the axially inner surface of the projection 56 and extends away therefrom and parallel to the periphery edge of the walls 38 and 39. Further, the shoe 58 is initially positioned adjacent and spaced slightly from the annular braking surface 36 on the wheel 28. The braking shoe 58 is also concentric with and spaced radially from the flange 46, a slot 63 existing therebetween. In effect the braking shoe 58 has its ends located adjacent the flange ends 48, 49 of the flange 46 and extends across the spacing between the flange ends. An arcuate braking shoe 59 is provided in a mirror image fashion on the end cap 22. Referring to Figure 2, the axially facing surfaces 66 and 67 of the braking shoes 58 and 59 are spaced axially inwardly of the axially inwardly facing surfaces 68 and 69 of the walls 38 and 39 of the end caps 21 and 22.

The braking shoes 58 and 59 each have a cross sectional shape which is a parallelogram, as shown in Figures 2 and 4. Respective braking surfaces 61 and 62 are provided on the radially outer surfaces of the braking shoes 58 and 59 and face the annular braking surfaces 36 and 37 on the wheel 28. The braking shoes 58 and 59 are normally in a position in which the braking surfaces 61 and 62 thereon are spaced slightly from the braking surfaces 36 and 37 on the wheel 28. The braking shoes 58 and 59 are each stiff but resiliently and elastically flexible, so that a radially outward force applied thereto near the free ends thereof will elastically flex the braking shoes 58 and 59 generally radially outwardly to a braking position in which the braking surfaces 61 and 62 thereon are in firm frictional engagement with the braking surfaces 36 and 37 on the wheel 28. In effect, this elastic flexing of the braking shoes 58 and 59 of the preferred embodiment increases the radius of the arcuate curvature thereof.

A manually actuable lever 76 is generally U-shaped and has a bight 77 and two spaced, parallel legs 78 and 79 which extend radially inwardly on opposite sides of the wheel 28 and between the flange ends of the flanges 46 and 47 through the slots 63 to locations adjacent the inner surfaces 68 and 69 of the end caps 21 and 22. The braking shoes 58 and 59 are disposed adjacent and axially inward of the lever arms 78 and 79. Respective, axially outwardly projecting cylindrical lugs 81 and 82 are provided at the free ends of the lever legs 78 and 79 and have, in this embodiment, diameters substantially equal to the diameters of the cylindrical openings 53 and 54 provided in the end caps 21 and 22. The cylindrical lugs 81 and 82 are substantially coaxial, and each is rotatably received in a respective one of the cylindrical openings 53 and 54, thereby supporting the lever 76 on the end caps 21 and 22 for pivotal movement between a raised position illustrated in solid lines in Figure 3 and a lowered position illustrated in broken lines in Figure 3. The end surfaces of the arcuate flanges 46 and 47 on the end caps 21 and 22 serve as stops which cooperate with surfaces on the legs of the lever 76 to limit pivotal movement of the lever 76 beyond the raised and lowered positions thereof.

Respective axially inward projections 86 and 87 are provided on the lever legs 78 and 79 adjacent the braking shoes 58 and 59 and radially offset from the axis of the cylindrical lugs 81 and 82. The inward projection 86, as shown in Figures 3 and 4, has a generally frustoconical shape, except that a flat surface 88 is provided on one side thereof. The frustoconical surface 91 thereon slidingly engages the side of the braking shoe 58 opposite the braking surface 61. The inward projection 87 is a mirror image of the projection 86, and has a frustoconical cam surface 92 thereon which engages the braking shoe 59.

As shown in Figure 1, the end cap 21 has two small outward projections 96 and 97 thereon adjacent the peripheral edge of the circular wall 38 in the region of the cylindrical opening 53, and the lever 76 has an axial outward projection 98 on the outer surface of the leg 78 thereof near the peripheral edge of the circular wall 38 of the end cap 21. When the lever 76 is in its raised position, the projection 98 is approximately aligned with the projection 96 on the end cap 21, and when the lever 76 is in its lowered position, the projection 98 is approximately aligned with the projection 97 on the end cap 21.

The end cap 21, including the main wall 38, projection 41, flange 46, projection 56 and braking shoe 58, is preferably an integral part molded from a synthetic resin, as is the end cap 22. Similarly, the lever 76, including bight 77, legs 78 and 79, lugs 81 and 82, and projections 86 and 87, is preferably an integral part molded from a synthetic resin. One suitable synthetic resin is ABS (acrylonitrilebutadienestyrene).

It will be recognized that the inventive braking apparatus can be easily retrofit into an existing assembly which includes the bracket 11 and the wheel 28 rotatably supported thereon by the rivet 23. The rivet 23 would be drilled out and removed, the wheel 28 would be removed from the bracket, the lever 76 would be operatively coupled to the end caps 21 and 22 and the end caps 21 and 22 would then be placed on opposite sides of the wheel 28, the wheel 28 and end caps 21 and 22 would be inserted into the bracket 11, and a new rivet 23 or a bolt and nut would be used to hold the component parts in place, as in Figure 2. Thus, the retrofit can be effected without modifying the bracket 11 or wheel 28. Moreover, if the existing assembly had a bolt and nut, rather than the rivet 23, the entire retrofit could be effected with only simple hand tools.

Figure 6 illustrates a caster 10A which is an alternative embodiment of the caster 10 of Figure 1. The caster 10A is substantially identical to the caster 10, except that the radial projection 56A which supports the braking shoe 58A on the end cap 21A is provided on top of the end cap 21A, and the braking shoe 58A extends along the top of the end cap 21A to a location near the lever 76A. The flange ends of the not illustrated annular flange on the end cap 21A are approximately aligned angularly with the ends of the braking shoe 58A. The outer end 102 of the lever 76A is beveled so as to be substantially parallel to the floor when the lever 76A is manually moved to its lowered position.

The embodiment of Figure 6 is considered somewhat more aesthetically appealing than the embodiment of Figure 1, because the radial projection 56A and a portion of the braking shoe 58A are normally hidden from view by the flange 13 of the yoke 12.

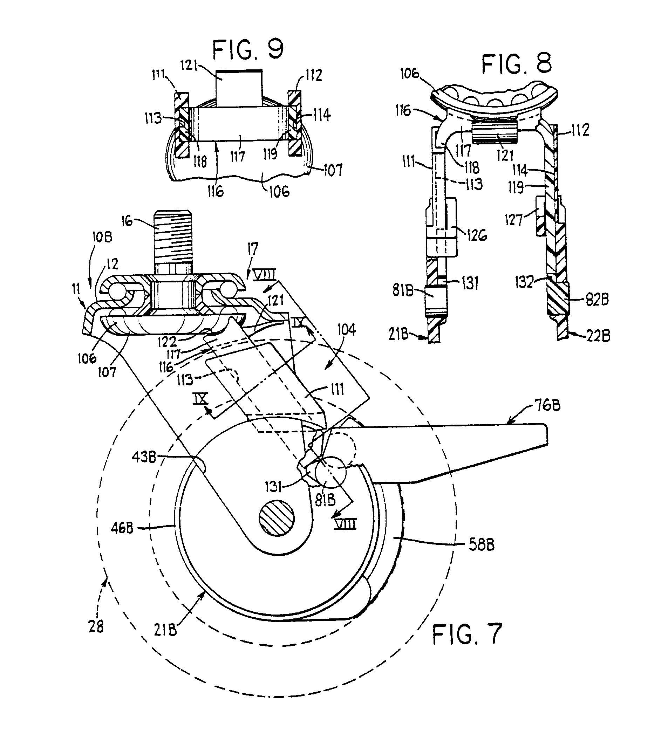

The embodiment of Figures 7—9 is substantially identical to the embodiment of Figures 1—5, except that it includes a braking mechanism 104 for preventing rotation of the yoke 11 relative to the kingpin 16. Accordingly, only the further braking mechanism 104 is described in detail.

As mentioned above, the bearing arrangement 17 which facilitates the rotatable support of the yoke 11 on the kingpin 16 is substantially identical to that disclosed in the U.S. Patent No. 4 219 903 and it is therefore described only briefly. It includes a central opening in the bight 12 of the yoke 11 through which the inverted kingpin 16 extends, upper and lower bearing races secured to the kingpin 16 and disposed on opposite sides of the bight 12, and a plurality of ball bearings disposed between the respective bearing races and the bight 12 of the yoke 11. The outer surface 107 of the lower bearing race serves as an annular braking surface as described hereinafter.

Respective upward projections 111 and 112 are provided on the tops of the end caps 21B and 22B and extend toward the rearmost portion of the annular braking surface 107 with a forward incline. Respective rectilinear recesses or grooves 113 and 114 (Figure 9) of generally rectangular cross section are provided in the projections 111 and 112 and extend in a direction defined approximately by a line extending between the rearmost portion of the braking surface 107 and the axis of the cylindrical lugs 81B and 82B of the lever 76B. The grooves 113 and 114 preferably extend through the arcuate flanges provided at the peripheral edges of the end caps 21B and 22B.

A U-shaped braking element 116 (Figure 8) has a bight 117 and two spaced legs 118 and 119, the legs 118 and 119 being respectively slidably received in the grooves 113 and 114, and the bight 117 being located adjacent the lower bearing race 106. The bight 117 has a resiliently flexible projection 121 extending outwardly therefrom in a direction substantially normal to the bight 117 and to the legs 118 and 119. The outer end of the projection 121 slidably engages the underside of the bight 12 of the yoke 11 at the rear end thereof. The bight 117 of the braking element 116 has a concave braking surface 122 on the upper side thereof which faces the correspondingly shaped convex braking surface 107 on the bearing race 106.

The braking element 116 is movable between actuated and deactuated positions in which the braking surface 122 is respectively engaging and free of engagement with the braking surface 107 on the bearing race 106.

The end caps 21B and 22B preferably include retainers 126 and 127 which extend across the grooves 113 and 114 near the lower ends thereof to maintain the lower ends of the braking element legs 118 and 119 in the grooves 113 and 114.

The lever 76B is substantially identical to the lever 76 of Figure 1, except that respective radially projecting cams 131 and 132 are provided on the cylindrical lugs 81B and 82B thereof and are engageable with the lower ends of the legs 118 and 119 of the braking element 116.

It will be recognized that the caster braking mechanism 104 could also be incorporated into the embodiment of Figure 6.

Operation

The embodiment of Figures 1—5 operates in the following manner. The lever 76 is normally in its raised position, as shown in solid lines in Figure 3, and the elastic memory of the material of the braking shoes 58 and 59 keep them in positions in which the braking surfaces 61 and 62 thereon are spaced slightly from the braking surfaces 36 and 37 on the wheel 28, as shown in Figure 2. The braking mechanism thus has little or no effect on rotation of the wheel 28, permitting the apparatus supported on the caster 10 to be moved freely from place to place.

When it becomes necessary to engage the braking mechanism to prevent rotation of the wheel 28, the lever 76 is manually moved to the lowered position illustrated in broken lines in Figure 3. As the lever 76 is moved downwardly, the cam surfaces 91 and 92 on the legs 78 and 79 of the lever engage and slide along the braking shoes 58 and 59 and flex them radially outwardly to a braking position in which the braking surfaces 61 and 62 thereon are in firm engagement with the braking surfaces 36 and 37 on the wheel 28. Since the braking shoes are fixed to the end caps 21 and 22 and the end caps are fixed against rotation with respect to the yoke 11, the firm frictional engagement between the braking shoes 58 and 59 and the wheel 28 prevents rotation of the wheel 28 relative to the yoke 11. As shown in broken lines in Figure 3, the cam surface 91 has moved slightly past a position of dead center engagement with the braking shoe 58 when the lever is in the lowered position, and thus tends to resist inadvertent upward movement of the lever 77. The braking mechanism is subsequently released by manually raising the lever 76 to its original position, the elastic memory of the material of the braking shoes causing them to move radially inwardly to their original, retracted position and thus out of firm engagement with the wheel 28.

A visual indication of whether or not the braking mechanism is actuated is provided by the projection 98 of the lever 76, which will be substantially aligned with the projection 96 on the end cap 21 when the lever 76 is in its raised position and substantially aligned with the projection 97 on end cap 21 when the lever 76 is in its lowered position.

The end caps 21 and 22 help to protect the bearing arrangement 17 (Figure 1) from the elements, including dust, dirt and precipitation.

The embodiment of Figure 6 operates in a manner substantially identical to that of the embodiment of Figures 1—5, and such operation is therefore not described in detail.

The embodiment of Figures 7—9 includes a braking mechanism for the wheel 28 which is substantially identical to that of the embodiment of Figures 1—5 and is actuated in a similar manner by the lever 76B. In addition, the embodiment of Figures 7—9 includes the braking mechanism 104, which operates in the following manner.

When the lever 76B is moved downwardly to actuate the braking mechanism which locks the wheel 28, the cams 131 and 132 thereon cooperate with the lower ends of the legs 118 and 119 of the braking element 116 and urge the braking element upwardly until the braking surface 122 thereon is in firm frictional engagement with the braking surface 107 on the lower bearing race 106. Since the bearing race 106 is securely fixed to the kingpin 16, relative rotation of the kingpin 16 and yoke 11 is prevented. The resilient projection 121 is flexed as the braking element 116 moves upwardly, and continuously urges the braking element 116 downwardly.

When the lever 76B is raised to release the braking mechanism for the wheel 28, the cams 131 and 132 return to their original positions and permit the braking element 116 to move downwardly under the urging of the resilient projection 121 until the braking surface 122 thereon is free of engagement with the braking surface 107 on the bearing race 106. The yoke 11 is then free to pivot again relative to the kingpin 16.

Although preferred embodiments of the invention have been disclosed in detail for illustrative purposes, it will be recognized that the scope of the present invention includes a number of variations or modifications of the disclosed embodiments, including the rearrangement of parts.

**Claims**

1. A wheel braking apparatus, comprising:
a bracket (11) which includes spaced first and second flanges (13, 14);
an axle (23) which extends between and has its ends fixedly supported on said flanges;

a wheel (28) rotatably supported on a bearing means (29) on said axle (23), said wheel (28) having means defining a tread (34) on a periphery thereof and having means defining a generally annular and radially inwardly facing first braking surface (36) concentric with said axle (23) and located radially between said axle (23) and said tread (34);

an end cap (21, 21A, 21B) which is disposed between said wheel (28) and said first flange (13) of said bracket (11) and includes a generally circular wall (38) which is concentric with and extends radially of said axle (23);

an elongate, arcuate, braking shoe (58, 58A, 58B) extending along said first braking surface (36) adjacent thereto and having one end (58') supported on said end cap (21, 21A, 21B), said braking shoe (58, 58A, 58B) having thereon a generally radially outwardly facing second braking surface (61) which is adjacent and faces said first braking surface (36) on said wheel (28), being normally in a retracted position in which said second braking surface (61) is substantially free of engagement with said first braking surface (36) and being movable generally radially outwardly from said retracted position to a braking position in which said second braking surface (61) is firmly engaging said first braking (36) surface so as to prevent relative rotation of said wheel (28) and bracket (11) about said axle (23); and

manually actuable means cooperable with said braking shoe (58, 58A, 58B) for effecting movement of said braking shoe (58, 58A, 58B) between its braking and retracted positions, said manually actuable means including a lever (76, 76A, 76B) supported on said end cap (21, 21A, 21B) for movement within a range bounded by first and second positions and having means (86) cooperable with said braking shoe (58, 58A, 58B) to effect said radial movement of said braking shoe from its retracted to its braking position as said lever (76, 76A, 76B) moves from said second to said first position, characterized in that the circular wall (38) has a recess (43, 43B) in an outwardly facing surface thereof which has a shape substantially congruent with that of a portion of said first flange (13) of said bracket (11) supporting said axle (23), said first flange (13) being disposed in said recess (43) to prevent rotation of said end cap (21, 21A, 21B) about said axle (23) relative to said bracket (11); said end cap (21, 21A, 21B) further including an annular flange (46, 46B) projecting axially toward said wheel (28) from peripheral edges of said circular wall (38) said circular wall (38) and said annular flange (46, 46B) thereby defining a shield for shielding said bearing means (29) being arranged between said flanges (13, 14) from dust, threads and the like, means (48, 49) defining an opening (46') in said annular flange (46, 46B);

said braking shoe (58, 58A, 58B) being resiliently flexible and having its one end (58') fixed to said annular flange (46, 46B) in the region of one end (48) of said opening (46') therein; said resilience of said braking shoe (58, 58A, 58B) continuously urging said braking shoe toward said retracted position thereof; wherein said circular wall (38), annular flange (46, 46B) and braking shoe (58, 58A, 58B) are all integral parts of said end cap (21, 21A, 21B) said cooperable (86) means being arranged at a location spaced from said one end (58') of said braking shoe (58, 58A, 58B) for radially flexing said braking shoe to effect radial movement of said braking shoe (58, 58A, 58B) from its retracted to its braking position; and said lever (76, 76A, 76B) being oriented entirely axially between said bracket flanges (13, 14).

2. The apparatus according to claim 1, wherein said lever (76, 76A, 76B) is supported on said end cap (21, 21A, 21B) for pivotal movement between said first and second positions about an axis extending generally parallel to said axle (23) and has a cam surface (91) thereon engageable with said braking shoe (58, 58A, 58B) on a side thereof opposite said second braking surface (61) for effecting said radial movement of said braking shoe from said retracted position to said braking position in response to pivotal movement of said lever (76, 76A, 76B).

3. The apparatus according to claim 2, wherein said wheel (28) has a said first braking surface (36, 37) on each side thereof; including a further said end cap (22) which is substantially a mirror image of said first-mentioned end cap (21, 21A, 21B) and is provided between said wheel (28) and said second flange (14) of said bracket (11); and wherein said lever (76, 76A, 76B) is generally U-shaped and has two legs (78, 79) which are disposed on opposite sides of said wheel, each said leg (78, 79) being pivotally supported on a respective said end cap (21, 21A, 21B; 22, 22B) and having a said cam surface (91, 92) thereon cooperable with said braking shoe (58, 58A, 58B; 59) on the associated end cap, said two legs of said lever and said two end caps being oriented between said first and second flanges (13, 14).

4. The apparatus according to claim 3, wherein each said end cap (21, 21A, 21B; 22, 22B) has a second generally cylindrical opening (53, 54) in said circular wall (38, 39) thereof coaxial with said axis (23), and wherein said lever (76, 76A, 76B) has near a free end of each said leg (78, 79) thereof a generally cylindrical lug (81, 81A; 82) which is rotatably received within said second cylindrical opening in the associated end cap to effect said pivotal support of said lever on said end caps, each said leg (78, 79) of said lever extending through said opening (46') in said annular flange (46, 46B) of the associated end cap.

5. The apparatus according to claim 4, wherein each said end cap has stop means (48, 49; 52) cooperable with said legs (78, 79) of said lever (76, 76A, 76B) for preventing movement of said lever beyond said first and second positions thereof, said stop means including said opening (46') in said annular flange (46, 46B; 47) of each said end cap (21, 21A, 21B; 22, 22B) having surfaces engageable with surfaces on the associated leg of said lever when said lever is in said first and second positions.

6. The apparatus according to claim 4, wherein said end caps (21, 21A, 21B; 22) and said lever (76, 76A, 76B) are made of a moldable synthetic material.

7. The apparatus according to claim 1 or 3, including a bracket support (16), said bracket (11) being supported on said bracket support (16) for pivotal movement about a generally vertical second axis, said bracket support (16) having a swivel brake means comprising a generally annular third braking surface (107) thereon concentric with said second axis; including a braking element (116)) having a fourth braking surface (122) thereon and means (111, 112) supporting said braking element (116) for movement between actuated and deactuated positions in which said fourth braking surface (122) is respectively in firm engagement with and substantially free of engagement with said third braking (107) surface; and wherein said lever (76B) has means (131) cooperable with said braking element (116) for moving said braking element in response to movement of said lever, said braking shoe (58B) and said braking element (116) respectively moving from said retracted and deactuated positions to said braking and actuated positions as said lever is moved from said second to said first position, the aforesaid swivel brake means being oriented between said first and second flanges (13, 14).

8. The apparatus according to claim 7, including second bearing means (17) for effecting said rotatable support of said bracket (11) on said bracket support (16), said second bearing means (17) including at least one annular bearing race (106) supported on said bracket support (16), said third braking surface (107) being an outer surface of said annular bearing race (106).

9. The apparatus according to claim 7, including resilient means (121) for yieldably urging said braking element (116) toward said deactuated position;

wherein each said leg of said lever (76B) has a further cam surface (131, 132) thereon; and

wherein said braking element (116) is generally U-shaped and has a bight (117) and two legs (118, 119), said legs of said braking element being disposed on opposite sides of said wheel (28), said fourth braking surface (122) being provided on said bight (117) of said braking element, and said further cam surfaces (131, 132) on said lever (76B) being cooperable with said legs (118, 119) of said braking element at locations remote from said bight (117) for effecting said movement thereof in response to movement of said lever.

10. The apparatus according to claim 9, wherein said resilient means includes a resiliently flexible tab (121) integral with and projecting outwardly from said bight (117) of said U-shaped member, an outer end of said tab (121) engaging a surface on said bracket (11) and said tab being resiliently flexed as said braking element (116) is moved from said deactuated to said actuated position.

11. The apparatus according to claim 10, wherein said means movably supporting said braking element (116) includes an upward projection (111, 112) on each said end cap (21B, 22B) integral therewith and an elongate recess (113, 114) in an axially inwardly facing surface of each said projection, each said leg (118, 119) of said braking element (116) being slidably received within a respective said elongate recess.

12. The apparatus according to claim 11, including means on each said end cap (21B, 22B) cooperable with the associated leg (118, 119) of said braking element (116) near an end thereof remote from said bight (117) for retaining the leg in said elongate recess (113, 114) therein.

**Patentansprüche**

1. Radbremsvorrichtung, umfassend

eine Konsole (11), die mit Abstand angeordnete erste und zweite Flansche (13, 14) einschließt,

eine Achse (23), die sich zwischen den Flanschen erstreckt und deren Enden fixiert an den Flanschen abgestützt sind, ein Rad (28), das an einer Lagervorrichtung (29) auf der Achse (23) drehbar abgestützt ist, wobei das Rad (28) Mittel aufweist, die eine Lauffläche (34) an einer Peripherie davon bilden, und Mittel aufweist, die eine im allgemeinen ringförmige und radial einwärtsgerichtete erste Bremsoberfläche (36) konzentrisch mit der Achse (23) bilden und radial zwischen der Achse (23) und der Lauffläche (34) befindlich, eine Endkappe (21, 21A, 21B), die zwischen dem Rad (28) und dem ersten Flansch (13) der Konsole (11) angeordnet ist und eine im allgemeinen kreisförmige Wand (38) einschließt, die konzentrisch mit der Achse (23) vorgesehen ist und sich radial der Achse (23) erstreckt,

einen länglichen, gewölbten Bremsschuh (58, 58A, 58B), der sich entlang der ersten Bremsoberfläche (36) angrenzend daran erstreckt und ein Ende (58') besitzt, das an der Endkappe (21, 21A, 21B) abgestützt ist, wobei der Bremsschuh (58, 58A, 58B) daran eine im allgemeinen radial nach außen gerichtete zweite Bremsoberfläche (61) besitzt, die angrenzend vorgesehen ist und der ersten Bremsoberfläche (36) an dem Rad (28) gegenüberliegt, die sich normalerweise in einer zurückgezogenen Position befindet, in der die zweite Bremsoberfläche (61) im wesentlichen frei von Eingriff mit der ersten Bremsoberfläche (36) ist und im allgemeinen radial nach außen von der zurückgezogenen Position her nach einer Bremsposition hin bewegbar ist, in welcher die zweite Bremsoberfläche (61) die erste Bremsoberfläche (36) fest erfaßt, so daß relative Drehung des Rades (28) und der Konsole (11) um die Achse (23) verhindert wird, und eine manuell betätigbare Vorrichtung, die mit dem Bremsschuh (58, 58A, 58B) zusammenwirkt, um eine Bewegung des Bremsschuhs (58, 58A, 58B) zwischen seiner bremsenden Position und seiner zurückge-zogenen Position zu bewirken, wobei die manuell betätigbare Vorrichtung einen Hebel (76, 76A, 76B) einschließt, der auf der Endkappe (21, 21A, 21B) abgestützt ist, zur Bewegung innerhalb eines Bereiches, der durch erste und zweite Positionen begrenzt ist, und eine Vorrichtung (86) besitzt, die mit dem Bremsschuh (58, 58A, 58B) zusammenwirkt, um die genannte Radialbewegung des genannten Bremsschuhs von seiner zurückgezogenen in seine bremsende Position zu bewirken, wenn sich der Hebel (76, 76A, 76B) von der genannten zweiten in die genannte erste Position bewegt, dadurch gekennzeichnet, daß die kreisförmige Wand (38) eine Aussparung (43, 43B) in einer nach außen gerichteten Oberfläche davon besitzt, die eine Form, im wesentlichen kongruent mit derjenigen eines Teilstücks des ersten Flansches (13) der Konsole (11), aufweist, welche die Achse (23) abstützt, wobei der erste Flansch (13) in der Aussparung (43) angeordnet ist, um Drehung der Endkappe (21, 21A, 21B) um die Achse (23) relativ zur Konsole (11) zu verhindern, daß die Endkappe (21, 21A, 21B) ferner einen ringförmigen Flansch (46, 46B) einschließt, der axial auf das Rad (28) zu von den peripheren Kanten der kreisförmigen Wand (38) her vorragt, wobei die kreisförmige Wand (38) und der ringförmige Flansch (46, 46B) dadurch einen Schutzschild bilden, um die Lagervorrichtung (29), die zwischen den Flanschen (13, 14) angeordnet ist, gegen Staub, Fasern und dergleichen zu schützen, wobei Mittel (48, 49) eine Öffnung (46') in dem ringförmigen Flansch (46, 46B) bilden, daß der Bremsschuh (58, 58A, 58B) elastisch flexibel ist und daß das eine Ende (58') an dem ringförmigen Flansch (46, 46B) in dem Bereich des einen Endes (48) der Öffnung (46') darin fixiert ist, wobei die Elastizität des Bremsschuhs (58, 58A, 58B) den Bremsschuh kontinuierlich nach der zurückgezogenen Position davon hin drückt, daß die kreisförmige Wand (38), der ringförmige Flansch (46, 46B) und der Bremsschuh (58, 58A, 58B) alle integrale Teile der Endkappe (21, 21A, 21B) sind, wobei die zusammenwirkenden Mittel (86) an einer Stelle angeordnet sind, die von dem einen Ende (58') des Bremsschuhs (58, 58A, 58B) mit Abstand angeordnet ist, um den genannten Bremsschuh radial zu biegen, um die genannte radiale Bewegung des Bremsschuhs (58, 58A, 58B) von seiner zurückgezogenen in seine bremsende Position zu bewirken, und daß der Hebel (76, 76A, 76B) insgesamt axial zwischen den Konsolflanschen (13, 14) ausgerichtet ist.

2. Radbremsvorrichtung nach Anspruch 1, dadurch gekennzeichnet, daß der Hebel (76, 76A, 76B) auf der Endkappe (21, 21A, 21B) abgestützt ist, zur Schwenkbewegung zwischen der genannten ersten Position und der genannten zweiten Position um eine Achse, die sich im allgemeinen parallel mit der Achse (23) erstreckt und eine Nockenoberfläche (91) daran aufweist, die eingreifbar ist in den Bremsschuh (58, 58A, 58B) an einer Seite davon gegenüber der zweiten Bremsoberfläche (61), zum Bewirken der genannten radialen Bewegung des genannten Bremsschuhs aus der genannten zurückgezogenen Position in die genannte Bremsposition in Ansprecherwiderung auf die Schwenkbewegung des Hebels (76, 76A, 76B).

3. Radbremsvorrichtung nach Anspruch 2, dadurch gekennzeichnet, daß das Rad (28) eine erste Bremsoberfläche (36, 37) an jeder Seite davon aufweist, daß eine weitere Endkappe (22) eingeschlossen ist, die im wesentlichen ein Spiegelbild der erstgenannten Endkappe (21, 21A, 21B) ist und zwischen dem Rad (28) und dem zweiten Flansch (14) der Konsole (11) vorgesehen ist, und daß der Hebel (76, 76A, 76B) im allgemeinen U-förmig vorgesehen ist und zwei Schenkel (78, 79) besitzt, die an entgegengesetzten Seiten des genannten Rades angeordnet sind, wobei jeder Schenkel (78, 79) an einer entsprechenden Endkappe (21, 21A, 21B; 22, 22B) schwenkbar abgestützt ist und eine Nockenoberfläche (91, 92) daran aufweist, die mit dem Bremsschuh (58, 58A, 58B; 59) an der zugeordneten Endkappe zusammenwirkbar ist, wobei die genannten zwei Schenkel des genannten Hebels und die genannten zwei Endkappen zwischen dem ersten Flansch und zweiten Flansch (13, 14) ausgerichtet sind.

4. Radbremsvorrichtung nach Anspruch 3, dadurch gekennzeichnet, daß jede Endkappe (21, 21A, 21B; 22, 22B) eine zweite, im allgemeinen zylindrische Öffnung (53, 54) in der kreisförmigen Wand (38, 39) davon koaxial mit der Achse (23) aufweist, und daß der Hebel (76, 76A, 76B) nahe einem freien Ende jedes Schenkels (78, 79) davon einen im allgemeinen zylindrischen Ansatz (81, 81A; 82), der in der zweiten zylindrischen Öffnung in der zugeordneten Endkappe drehbar aufgenommen ist, um die genannte schwenkbare Abstützung des genannten Hebels an den genannten Endkappen zu bewirken, wobei jeder Schenkel (78, 79) des genannten Hebels sich durch die Öffnung (46') in dem ringförmigen Flansch (46, 46B) der zugeordneten Endkappe erstreckt, aufweist.

5. Radbremsvorrichtung nach Anspruch 4, dadurch gekennzeichnet, daß jede genannte Endkappe eine Stoppvorrichtung (48, 49; 52) aufweist, die mit den Schenkeln (78, 79) des Hebels (76, 76A, 76B) zusammenwirkbar ist, um eine Bewegung des genannten Hebels über die genannten ersten und zweiten Positionen davon hinaus zu verhindern, wobei die genannte Stoppvorrichtung die genannte Öffnung (46') in dem ringförmigen Flansch (46, 46B; 47) jeder Endkappe (21, 21A, 21B; 22, 22B) einschließt, mit Oberflächen, die in Oberflächen an dem zugeordneten Schenkel des genannten Hebels eingreifbar sind, wenn der genannte Hebel in den genannten ersten und zweiten Positionen ist.

6. Radbremsvorrichtung nach Anspruch 4, dadurch gekennzeichnet, daß die Endkappen (21, 21A, 21B; 22) und der Hebel (76, 76A, 76B) aus einem formbaren synthetischen Material hergestellt sind.

7. Radbremsvorrichtung nach Anspruch 1 oder 3, dadurch gekennzeichnet, daß eine Konsolstütze (16) vorgesehen ist, wobei die Konsole (11) an der Konsolstütze (16) abgestützt ist, zur Schwenkbewegung um eine im allgemeinen vertikale zweite Achse, wobei die Konsolstütze (16) eine Schwenkbremsvorrichtung besitzt, die eine im allgemeinen ringförmige dritte Bremsoberfläche (107) daran aufweist, konzentrisch mit der genannten zweiten Achse, daß ein Bremselement (116) eingeschlossen ist, mit einer vierten Bremsoberfläche (122) daran und einer Vorrichtung (111, 112), die das Bremselement (116) abstützt zur Bewegung zwischen betätigten und unbetätigten Positionen, worin die vierte Bremsoberfläche (122) entsprechend in festem Eingriff und im wesentlichen frei von Eingriff mit der dritten Bremsoberfläche (107) ist, und daß der Hebel (76B) eine Vorrichtung (131) aufweist, die mit dem Bremselement (116) zusammenwirkt, zur Bewegung des genannten Bremselementes in Ansprecherwiderung auf die Bewegung des genannten Hebels, wobei der Bremsschuh (58B) und das Bremselement (116) entsprechend sich von den genannten zurückgezogenen und unbetätigten Positionen nach den genannten bremsenden und betätigten Positionen hin bewegen, sobald der genannte Hebel aus der genannten zweiten in die genannte erste Position bewegt wird, wobei die vorgenannte Schwenkbremsvorrichtung zwischen den ersten und zweiten Flanschen (13, 14) ausgerichtet ist.

8. Radbremsvorrichtung nach Anspruch 7, dadurch gekennzeichnet, daß eine zweite Lagervorrichtung (17) eingeschlossen ist, zum Bewirken der genannten drehbaren Abstützung der Konsole (11) auf der Konsolstütze (16), wobei die zweite Lagervorrichtung (17) zumindest einen ringförmigen Lagerkranz (106) einschließt, der an der Konsolstütze (16) abgestützt ist, wobei die dritte Bremsoberfläche (107) eine äußere Oberfläche des ringförmigen Lagerkranzes (106) ist.

9. Radbremsvorrichtung nach Anspruch 7, dadurch gekennzeichnet, daß eine elastische Vorrichtung (121) vorgesehen ist, zum nachgiebigen Drücken des Bremselementes (116) auf die unbetätigte Position zu, daß jeder genannte Schenkel des Hebels (76B) eine weitere Nockenoberfläche (131, 132) daran besitzt, und daß das Bremselement (116) im allgemeinen U-förmig vorgesehen ist und eine Einbuchtung (117) und zwei Schenkel (118, 119) besitzt, wobei die genannten Schenkel des genannten Bremselementes an entgegengesetzten Seiten des Rades (28) angeordnet sind, daß die vierte Bremsoberfläche (122) an der Einbuchtung (117) des genannten Bremselementes vorgesehen ist, und daß die weiteren Nockenoberflächen (131, 132) an dem Hebel (76B) mit den Schenkeln (118, 119) des genannten Bremselementes an Lokationen, entfernt von der Einbuchtung (117), zusammenwirkbar sind, um die genannte Bewegung davon in Ansprecherwiderung auf die Bewegung des genannten Hebels zu bewirken.

10. Radbremsvorrichtung nach Anspruch 9, dadurch gekennzeichnet, daß die genannten elastischen Mittel eine elastisch flexible Nase (121) einschließen, integral mit und von der Einbuchtung (117) des genannten U-förmigen Bauteils nach außen vorragend, wobei ein äußeres Ende der Nase (121) eine Oberfläche an der Konsole (11) erfaßt und die genannte Nase elastisch gebogen wird, wenn das Bremselement (116) von der genannten unbetätigten Position in die genannte betätigte Position bewegt wird.

11. Radbremsvorrichtung nach Anspruch 10, dadurch gekennzeichnet, daß die genannten Mittel, welche das Bremselement (116) bewegbar abstützen, einen Aufwärtsvorsprung (111, 112) an jeder Endkappe (21B, 22B), integral damit, und eine längliche Aussparung (113, 114) in einer axial einwärts gerichteten Oberfläche jedes genannten Vorsprungs einschließen, wobei jeder Schenkel (118, 119) des Bremselementes (116) innerhalb einer entsprechenden, genannten, länglichen Aussparung gleitbar aufgenommen ist.

12. Radbremsvorrichtung nach Anspruch 11, gekennzeichnet durch Mittel an jeder Endkappe (21B, 22B), mit dem zugeordneten Schenkel (118, 119) des Bremselementes (116) nahe einem Ende davon entfernt von der Einbuchtung (117) zusammenwirkbar, um den Schenkel in der länglichen Aussparung (113, 114) darin zurückzuhalten.

**Revendications**

1. Appareil de freinage de roues, comprenant:
une fourche (11) qui comprend un premier et un second flasques écartés (13, 14),
un axe (23) qui s'étend entre lesdits flasques, et dont les extrémités y sont supportées de manière fixe,
une roue (28) montée à rotation sur un moyen de roulement (29) sur ledit axe (23), cette roue (28) possédant des moyens définissant une surface de roulement (34) à sa périphérie et possédant un moyen définissant une première surface de freinage (36) généralement annulaire, et dirigée radialement vers l'intérieur, concentrique à l'axe (23) et disposée radialement entre l'axe (23) et la surface de roulement (34);
une coiffe d'extrémité (21, 21A, 21B) qui est disposée entre la roue (28) et la premier flasque (13) de la fourche (11), et comprend une paroi généralement circulaire (38) concentrique à l'axe (23) et s'étendant radialement par rapport à lui;
un patin de frein allongé, courbe (58, 58A, 58B) s'étendant le long de la première surface de freinage (36), près de celle-ci, et possédant une extrémité (58') supportée sur la coiffe d'extrémité (21, 21A, 21B), le patin de frein (58, 58A, 58B) portant une seconde surface de freinage (61) dirigée généralement radialement vers l'extérieur, qui est adjacente, et fait face à la première surface de freinage (36) sur la roue (28), étant normalement dans une position rétractée dans laquelle la seconde surface de freinage (61) n'est en substance pas en contact avec la première surface de freinage (36) et pouvant être amenée généralement radialement vers l'extérieur, de cette position rétractée dans une position de freinage dans laquelle la seconde surface de freinage (61) est fermement en contact avec la première surface de freinage (36), de façon à empêcher une rotation relative entre la roue (28) et la fourche (11) autour de l'axe (23); et des moyens actionnables manuellement, coopérant avec le patin de frein (58, 58A, 58B) pour produire un mouvement du patin de frein (58, 58A, 58B) entre sa position de freinage et sa position rétractée, ces moyens actionnables manuellement comprenant un levier (76, 76A, 76B) monté sur la coiffe d'extrémité (21, 21A, 21B) pour se déplacer dans un intervalle limité par une première et une seconde position, et possédant des moyens (86) coopérant avec le patin de frein (58, 58A, 58B) pour produire le mouvement radial du patin de frein, de sa position rétractée à sa position de freinage, lorsque le levier (76, 76A, 76B) passe de sa seconde à sa première position,

caractérisé en ce que la paroi circulaire (38) possède, dans une surface dirigée vers l'extérieur, un creux (43, 43B) d'une forme correspondant à celle d'une partie du premier flasque (13) de la fourche (11) supportant l'axe (23), le premier flasque (13) étant disposé dans le creux (43) pour empêcher la rotation de la coiffe d'extrémité (21, 21A, 21B) autour de l'axe (23), par rapport à la fourche (11); la coiffe d'extrémité (21, 21A, 21B) comprenant de plus un flasque annulaire (46, 46B) saillant axialement vers la roue (28) à partir des bords périphériques de la paroi circulaire (38), cette paroi circulaire (38) et ce flasque annulaire (46, 46B) définissant ainsi un écran pour protéger le moyen de roulement (29) disposé entre les flasques (13, 14) de la poussière, de fils et analogues, des moyens (48, 49) définissant une ouverture (46') dans le flasque annulaire (46, 46B); le patin de frein (58, 58A, 58B) étant flexible élastiquement et possédant une extrémité (58') fixée au flasque annulaire (46, 46B) dans la région d'une extrémité (48) de son ouverture (46'); l'élasticité du patin de frein (58, 58A, 58B) pressant en continu le patin de frein vers sa position rétractée; la paroi circulaire (38), le flasque annulaire (46, 46B) et le patin de frein (58, 58A, 58B) font tous partie intégrante de la coiffe d'extrémité (21, 21A, 21B), le moyen de coopération (86) étant disposé en un endroit écarté de ladite extrémité (58') du patin de frein (58, 58A, 58B) pour fléchir radialement le patin de frein, pour produire le mouvement radial du patin de frein (58, 58A, 58B) de sa position rétractée à sa position de freinage; et le levier (76, 76A, 76B) étant disposé entièrement axialement entre les flasques (13, 14) de la fourche.

2. Appareil selon la revendication 1, dans lequel le levier (76, 76A, 76B) est supporté sur la coiffe d'extrémité (21, 21A, 21B) pour pivoter entre la première et la seconde position autour d'un axe s'étendant généralement parallèlement à l'axe (23), et porte une surface de came (91) pouvant venir en contact avec le patin de frein (58, 58A, 58B), d'un côté de celui-ci opposé à la seconde surface de freinage (61), pour produire le mouvement radial du patin de frein de la position rétractée à la position de freinage, en réponse au mouvement de pivotement du levier (76, 76A, 76B).

3. Appareil selon la revendication 2, dans lequel la roue (28) possède une première surface de freinage (36, 37) de chaque côté; comprenant une autre coiffe d'extrémité (22) qui est substantiellement l'image spéculaire de la première coiffe d'extrémité (21, 21A, 21B) et est prévue entre la roue (28) et le second flasque (14) de la fourche (11); et en ce que le levier (76, 76A, 76B) a généralement une forme en U et possède deux bras (78, 79) disposés de part et d'autre de la roue, chaque bras (78, 79) étant monté à pivotement sur une coiffe d'extrémité (21, 21A, 21B; 22, 22B) correspondante et portant une surface de came (91, 92) coopérant avec le patin de frein (58, 58A, 58B; 59) sur la coiffe d'extrémité associée, les deux bras du levier et les deux coiffes d'extrémité étant disposés entre le premier et le second flasque (13, 14).

4. Appareil selon la revendication 3, dans lequel chaque coiffe d'extrémité (21, 21A, 21B; 22, 22B) possède une seconde ouverture (53, 54) généralement cylindrique dans sa paroi circulaire (38, 39), coaxiale à l'axe (23), et en ce que le levier (76, 76A, 76B) possède près de l'extrémité libre de chaque bras (78, 79) une patte (81, 81A, 82) reçue à rotation dans la seconde ouverture cylindrique dans la coiffe d'extrémité associée, pour produire le support à pivotement du levier sur la coiffe d'extrémité, chaque bras (78, 79) du levier traversant l'ouverture (46') dans le flasque annulaire (46, 46B) de la coiffe d'extrémité associée.

5. Appareil selon la revendication 4, dans lequel chaque coiffe d'extrémité possède de moyens d'arrêt (48, 49; 52) pour coopérer avec les bras (78, 79) du levier (76, 76A, 76B), pour empêcher un mouvement du levier au-delà de sa première et de sa seconde position, les moyens d'arrêt comprenant l'ouverture (46') dans le flasque annulaire (46, 46B; 47) de chaque coiffe d'extrémité (21, 21A, 21B; 22, 22B) possédant des surfaces pouvant venir en contact avec des surfaces du bras associé du levier lorsque le levier se trouve dans la première et la seconde position.

6. Appareil selon la revendication 4, dans lequel les coiffes d'extrémité (21, 21A, 21B; 22, 22B) et le levier (76, 76A, 76B) sont réalisés en matière synthétique moulable.

7. Appareil selon la revendication 1 ou 3, comprenant un support de fourche (16), la fourche (11) étant supportée sur le support de fourche (16) pour pivoter autour d'un second axe généralement vertical, ce support de fourche (16) possédant un moyen de freinage à rotule portant une troisième surface de freinage (107) généralement annulaire, concentrique au second axe; comprenant un élément de freinage (116) portant une quatrième surface de freinage (122), et des moyens (111, 112) supportant l'élément de freinage (116) pour qu'il puisse se déplacer entre une position activée et une position désactivée, dans lesquelles la quatrième surface de freinage (122) est respectivement en contact ferme et en substance hors du contact avec la troisième surface de freinage (107); et dans lequel le levier (76B) possède un moyen (131) de coopération avec l'élément de freinage (116) pour déplacer l'élément de freinage en réponse au mouvement du levier, le patin de frein (58B) et l'élément de freinage (116) passant respectivement des positions rétractée et désactivée aux positions de freinage et activée lorsque le levier passe de la seconde à la première position, le moyen de freinage à rotule susmentionné étant disposé entre le premier et le second flasque (13, 14).

8. Appareil selon la revendication 7, comprenant un second moyen de roulement (17) pour assurer le support à rotation de la fourche (11) sur le support de fourche (16), ce second moyen de roulement (17) comprenant au moins un chemin de roulement annulaire (106) supporté sur le support de fourche (16), la troisième surface de freinage (107) étant une surface externe du chemin de roulement annulaire (106).

9. Appareil selon la revendication 7, comprenant un moyen élastique (121) pour presser élastiquement l'élément de freinage (116) vers la position désactivée;

dans lequel chaque bras du levier (76B) porte une autre surface de came (131, 132); et

dans lequel l'élément de freinage (116) est généralement en U et possède un organe coudé (117) et deux bras (118, 119), les bras de l'élément de freinage étant disposés de part et d'autre de la roue (28), la quatrième surface de freinage (122) étant prévue sur l'organe coudé (117) de l'élément de freinage, et les autres surfaces de came (131, 132) sur le levier (76B) pouvant coopérer avec les bras (118, 119) de l'élément de freinage en des endroits éloignés de l'organe coudé (117) pour produire son déplacement en réponse au mouvement du levier.

10. Appareil selon la revendication 9, dans lequel le moyen élastique comprend une patte (121) élastiquement flexible, faisant corps avec, et saillant vers l'extérieur de l'organe coudé (117) de l'élément en U, une extrémité externe de la patte (121) entrant en contact avec une surface de la fourche (11) et la patte étant fléchie élastiquement lorsque l'élément de freinage (116) est déplacé de la position désactivée à la position activée.

11. Appareil selon la revendication 10, dans lequel le moyen supportant de manière mobile l'élément de freinage (116) comprend une saillie vers le haut (111, 112) sur chaque coiffe d'extrémité (21B, 22B), faisant corps avec elles, et un creux allongé (113, 114) dans une surface de chaque saillie dirigée vers l'intérieur, chaque bras (118, 119) de l'élément de freinage (116) étant reçu à glissement dans un des creux allongés correspondant.

12. Appareil selon la revendication 11, comprenant des moyens sur chaque coiffe d'extrémité (21B, 22B), pouvant coopérer avec le bras (118, 119) associé de l'élément de freinage (116) près d'une de ses extrémités éloignée de l'organe coudé (117), pour retenir le bras dans son creux (113, 114) allongé.

0 105 144

FIG. 2

FIG. 4

FIG. 3

FIG. I

1

FIG. 6

FIG. 5

**0 105 144**

FIG. 9

FIG. 8

FIG. 7